# EUROPEAN PATENT APPLICATION

(11) **EP 1 548 624 A1**
(43) Date of publication of application: **29.06.2005**
(21) Application number: 03394114.7
(22) Date of filing: 22.12.2003
(51) Int. Cl.: G06F 17/60

(54) **A temperature controlled delivery system**

(71) Applicant: Willow Globe Track Limited, Dublin 12 (IE)
(72) Inventor: McCormack, Derek, Blackrock, County Dublin (IE); Moran, William, Dublin 15 (IE)
(74) Representative: McCarthy, Denis Alexis

(57) **Abstract**

A method for temperature controlled delivery of products, comprising the following steps. Products are stored in a storage area at a required temperature. Stored product details are electronically imported into a stock file on a computer. Orders are accepted for stored products. Order details are electronically imported into an order file on the computer. The order details are correlated with the stored product information on the computer. A delivery order notice, which includes product information from the stock file on the computer, is generated. The stored product is issued together with the delivery order notice from the storage area and placed into a vehicle at the required temperature. The delivery order notice information is imported into a general packet radio service (GPRS) system. The product is delivered to an end user and the stock and/or order file are updated on the computer from GPRS system once delivery is completed.

## Description

The present invention provides a method and apparatus for temperature controlled delivery of products, in particular for use in delivering temperature sensitive products such as, but not limited to, blood factor concentrates, vaccines and other pharmaceutical products.

In recent years there has been growing concern surrounding the maintenance of quality in relation to cold-chain storage and distribution of pharmaceutical products especially specialist biological pharmaceutical products such as blood factor concentrates and vaccines.

Historically, supplies of such products were transported in bulk from pharmaceutical companies to a national centre and therefrom dispatched to either hospitals or patients. This has resulted in much inefficiency. An audit in 2001 by The Medicines Control Agency (MCA) in the United Kingdom highlighted areas of critical deficiencies. These areas included temperature control of pharmaceutical and biological products, monitoring of said products when in cold-chain storage and subsequently cold-chain distribution of such products. These deficiencies comprised more than one-third of all critical deficiencies within the United Kingdom.

Validation is important in most industries, but is essential in the pharmaceutical and biological industries. It is absolutely necessary to demonstrate accurately and reproducibly that the pharmaceutical products supplied to the end users are of the highest standard and that the condition of said products have not deteriorated in any way from production through to use by the end users. Equally, it is important to provide a detailed traceable account of each product from manufacture to use. This ensures that if an individual product within a batch is contaminated or has deteriorated in quality, that a record exists which will indicate where the fault may have occurred. Alternatively the record also provides a means of identifying the source and batch of the contaminated product and/or other batches of the contaminated product that may have emanated from the source. Once identified the other products and/or source can be tested for similar contamination/deterioration. Previous systems have failed to provide any such means or assurances.

Furthermore, it is of utmost importance to maintain accurate medical records to accompany the pharmaceutical products that enter into the cold-chain storage/distribution system. Currently there is a significant lack of quality standards concerning the best practice relating to tracking and tracing of cold-chain pharmaceutical or biological products. The companies involved in the pharmaceutical or biological supply chain are constantly challenged to maintain good practices so that the products can be shipped to market at the correct temperature and be of the highest standard whilst demonstrating traceability and validity to the increasingly vigilant regulatory bodies.

The current methods employed do not give rise to such assurances and result in significant wastage due to poor administrative and implementation practices.

It is an object of the present invention to seek to alleviate the aforementioned problems.

Accordingly, the present invention provides a method for temperature controlled delivery of products, the method comprising the steps of:
storing products in a storage area at the required range of temperatures;
importing details of the stored products to a stock file on a computer;
accepting orders for stored products from an end-user;
importing details of each order into an order file on the computer;
relating order details in order file to stored product information in stock file on the computer;
generating a delivery order notice which includes product information from stock file on the computer;
issuing stored product and delivery order notice from the storage area;
placing issued product and delivery order notice into a refrigerated vehicle with temperatures at the required range, the refrigerated vehicle having a global positioning system (GPS);
importing information on the delivery order notice electronically into a general packet radio service (GPRS) communication system;
delivering issued product to an end user from the refrigerated vehicle; and
updating the stock file and/or the order file on the computer from GPRS communication system once delivery of issued goods has been completed.

Advantageously the products are received from either the pharmaceutical companies or the Central Authority responsible for issuing pharmaceutical products.

Advantageously the required range of temperatures are 2°C - 8°C. The method of the invention is easily adapted to any temperature range required by a person skilled in the art. Advantageously, the method of the invention provides a secure means for tracking and tracing products from the storage area to the end-user. Conveniently the method of the invention can also be used to recall products at any stage during the steps of the method, should a problem with a particular product be detected. This can ensure that quality control and product accountability are present throughout the method of the invention.

Ideally international standards [such as those devised by EAN, The International Standards Organisation] are used to uniquely identify each product. For example, each product can be identified by means of the EAN.UCC (The International and Uniform Code Council) system. This system is a barcode system, which is used as a basis for encoding relevant data. Optionally the barcode will include a Global Trade Item Number (GTIN) which will identify the product name and strength and at least one of the following pieces of information, quantity information, batch information, and expiration information, Global Location Number (GLN) or Global Relationship Service Number (GRSN). Ideally, each product is given a barcode at the point of manufacture. Conveniently the barcode assigned to each product when produced contains the GTIN. Optionally the barcode may also contain other information including batch and expiration information.

Preferably when the product is delivered to the storage area, the barcode of each item is scanned for electronic entry of product information into the stock file. Alternatively the information can be entered manually into the stock file on the computer. Conveniently the storage area comprises a processing area and a storage refrigerator. Advantageously entering product information onto the computer takes place in the processing area.

Ideally as each product item is logged into the stock file a second barcode is generated identifying the serial number of each product within a batch of products. For example, if there are ten product items within a batch, each product is assigned a number, one, two, and so forth. Ideally each product is tested in the processing area to establish its core temperature prior to storage and/or distribution.

Advantageously each product once logged and tested is placed in the storage refrigerator. Ideally the storage area operates with a plurality of paired refrigerator units. Preferably the refrigerator units are powered by mains electricity and are backed up by a generator which will start immediately should the electricity supply fail. Ideally monitoring equipment is used to ensure the temperature of the storage area remains within the desired range of temperatures. Conveniently the monitoring equipment is connected to a computerised control unit. Advantageously the computerised control unit contains a dial-out unit that can dial a series of numbers to alert personnel in the event of alarm activation and/or electricity supply failure. Preferably the monitoring equipment is also connected to the generator in the event of electricity supply failure. Advantageously the dial-out unit also enables personnel to access the monitoring equipment for real-time external monitoring.

Advantageously the invention uses network and telecommunication systems that facilitate a secure environment which in turn enables a secure method of data transmission. Ideally a central computer within the network is used to store the product and order information in stock and order files respectively. Advantageously this information can be accessed as required by other computers on the network. Ideally the quantity of information available to other computers is limited as desired by the central computer. Conveniently other pertinent information can also be stored on the central computer, for example, patient record files, possible substitutes for some or all of the products and patient prescriptions.

Preferably the GRPS system within the refrigerated vehicle is a mobile device. Optionally this may be a handheld GRPS device.

In one embodiment of invention, the method of the invention further includes the steps of:
producing patient prescriptions from a doctor or a hospital electronic format;
forwarding the electronic prescriptions to a pharmacist for dispensing; and
the pharmacist forwarding the electronic prescription as an order to the temperature controlled system.

Conveniently in this embodiment of the invention, when the order is dispatched, the order can be delivered to either the pharmacist, hospital, prescribing physician or where the patient can pick it up or alternatively the order can be delivered directly to the patient. Preferably in this embodiment of the invention when the product is issued from the storage area, a patient barcode is produced. Ideally the patient barcode is attached to each individual product, for example, each vial within a pack of ten, as well as each outer delivery box. Optionally the patient barcode contains information such as Global Relationship Service Number (GRSN) which identifies the relationship between two separate entities such as the patient and either the hospital or doctor and/or the patient and the product. Any other appropriate information may also be included in the patient barcode.

Advantageously the delivery location can be reassigned and relocated at any stage during the delivery process. Ideally if the end-user has to change location the information is relayed electronically to the central computer which in turn relays the information to the driver of the vehicle. Advantageously the information can be relayed to either the GPS or the GRPS system within the refrigerated vehicle. The driver of the refrigerated vehicle can react accordingly and the product can be delivered to the correct location.

Preferably once all deliveries have been completed and the GRPS system has updated the stock and/or order files on the central computer, the central computer then electronically advises the appropriate authorities that the delivery cycle has been completed. For example, the central computer may alert the doctor or hospital that initially issued the prescription that the patient or pharmacist had received the order. Alternatively the central computer might inform the Central Authority that the delivery had been successfully completed to aid validation and quality control.

Advantageously the method of the invention can be licensed by the Central Authority for use thereby providing a means of promoting assurance, validation and quality in the distribution of products that require strict temperature control.

The present invention further provides an apparatus operating in accordance with a method for temperature controlled delivery of products, the apparatus comprising means for storing products at temperatures in the desired range, means for electronically importing details of stored products into a stock file on a computer, means for accepting orders for stored products from an end-user, means for electronically importing details of the order into an order file on the computer, means for relating order details in the order file to stored product information in the stock file on the computer, means for generating a delivery order notice on the computer, means for issuing the stored product with the delivery order notice from the storage means, means for transporting the issued product to the end-user, the transporting means having a mobile communication system, means for installing the details from the delivery order notice into the communication system and means for updating the stock file and/or the order file on the computer from the mobile communication file once the issued product has been delivered to the end-user.

The invention will now hereinafter be more particularly described with reference to the accompanying drawings, which illustrate by way of example only, the structure and operation of an embodiment of the temperature controlled delivery system in accordance with the invention.

### In the drawings: -

Figure 1 is a flow chart illustrating the overall structure of the temperature controlled delivery system;
Figure 2 is a flow chart illustrating the breakdown of the transfer part of the temperature controlled delivery system;
Figure 3 is a flow chart illustrating the breakdown of the transfer and receipt part of the temperature controlled delivery system.
Figure 4 is a side view of a refrigerated vehicle; and
Figure 5 is an end view of a refrigerated vehicle with the rear doors of the vehicle and the door of the refrigerator in an open position.

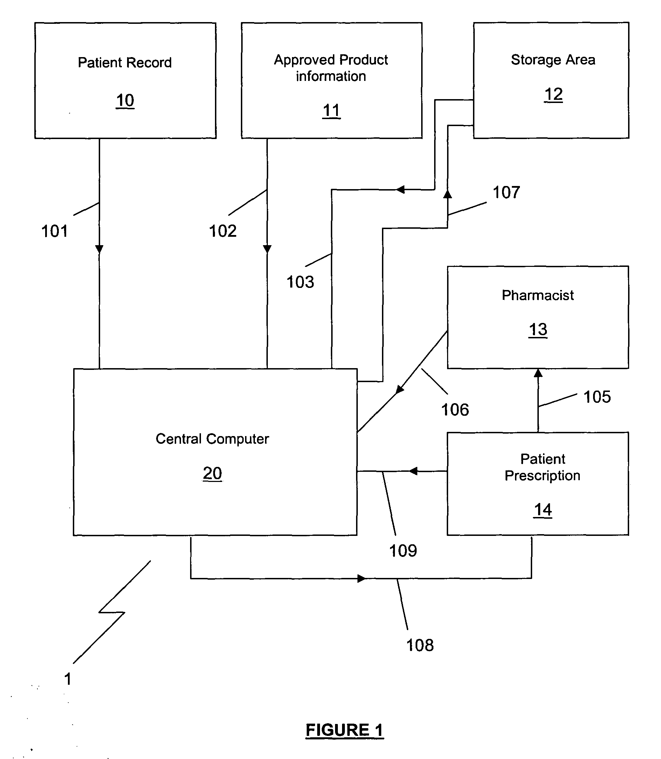

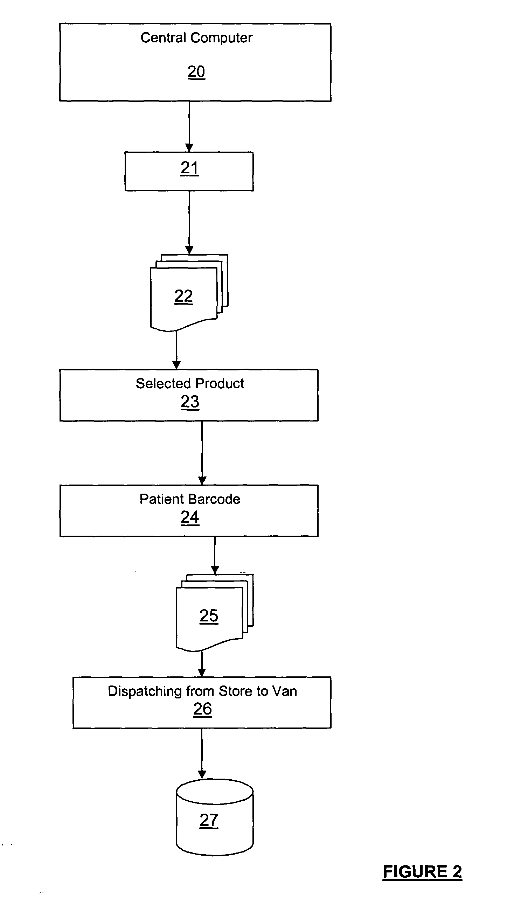

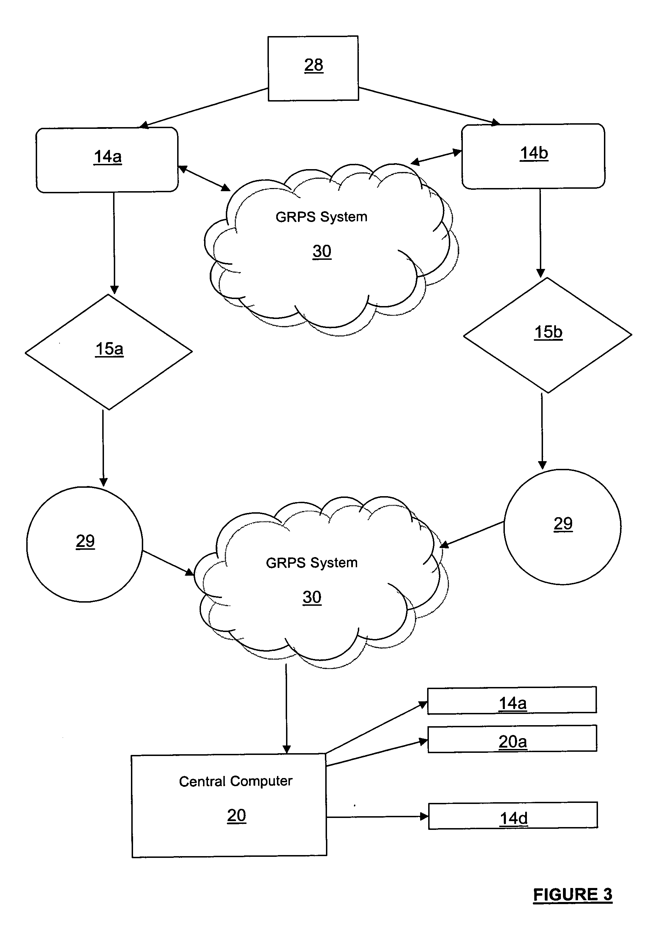

The steps of the method are now set out with reference to Figures 1 to 3.

Patient records 10 and approved product information 11 is sent electronically from the Central Issuing Authority to the central computer 20 at steps 101 and 102 respectively. The product information 11 is stored in a stock file and details new products and possible substitute products together with the GTIN of both the product and the substitute product.

Any other appropriate information is also included. The product is delivered to the storage area 12 from either the Central Issuing Authority or the pharmaceutical companies, when the delivery is accepted, the details of the delivery are electronically input by scanning the barcode of the product. All of the required information will be on the manufacturers barcode. Once each barcode is scanned the information is relayed electronically to the stock file on the central computer 20 at step 103. Any barcode information not included can be entered manually onto the central computer 20. The stock file is updated using the GTIN as an identification number and the quantity, batch, serial number and expiration information is added to the relevant product information.

The storage area 12 is divided into two areas, a processing area and a storage refrigerator. The product is initially accepted into the processing area, where scanning occurs. The product is also checked for quality and quantity. If the product is not received within the requisite temperature range i.e. 2°C to 8°C, the product is rejected and placed in a quarantine area. Accepted product is then transferred into the storage refrigerator. The storage area 12 operates with four refrigerator units, which work alternatively as pairs and as a backup in the event of failure of one pair. The storage area 12 is backed up by a generator, which will start immediately should the electricity supply fail.

The temperature of the storage area 12 is set between 2°C and 8°C and is monitored constantly. Monitoring equipment is used for both pairs of storage refrigerators, temperature probes are positioned on the two storage refrigerators between the process area and the storage refrigerators. These probes are supported by two ambient probes located outside the storage area 12 and also two ambient probes located outside the building. There are also connections to the power generator to indicate if the power should fail. As a final precautionary measure there is also a temperature probe that is packaged as a product and is placed in a product container and placed in the storage refrigerator thereby mimicking that of a real product. The alarm system is set to activate in the case of temperatures reaching either 3°C and 7°C. This allows time for reaction before the lower and upper temperature limits of 2°C and 8°C respectively are reached.

A computerised control unit is connected to the monitoring equipment and the generator. The control unit has a dial-out unit with a series of numbers, which can be called in the event of alarm activation and/or electricity supply failure. This also enables the refrigeration engineers to access the system so that real-time external monitoring can take place. All temperature data is recorded to allow a continuous audit of the system.

Patient prescriptions 14 are generated by the prescribing physician and are sent electronically to the pharmacist 13 at step 105. Alternatively the prescription may be forwarded directly to the central computer 20 at step 109. The pharmacist 13 sends the prescription or order to the central computer 20 at step 106. The prescription information is correlated with the information within the stock file on the central computer 20 and the relevant product is assigned to that prescription at step 21.

A picking list 22 relating the prescription or order to the product containing all the relevant product information is generated by the central computer 20 and is forwarded electronically to the storage area 12 at step 107. At the storage area 12, the product is selected 23 and verified by the barcode. A third barcode known as the patient barcode 24 is then generated for the individual products within a package, for example, each vial of product within a pack of ten. The patient barcode 24 is placed on each product. A fourth barcode is generated and placed on the outer box reflecting the product contained within. The fourth barcode contains the GTIN, GRSN and other relevant data. The patient barcode 24 contains the GRSN as well as other relevant information. The GRSN uniquely identifies the patient and/or the doctor/hospital.

A delivery order notice 25 is generated in conjunction with the patient barcode 24 and is dispatched with the product. The product is issued from the storage area 12 into the refrigerated van at step 26. Electronically the barcode 24 is scanned as the product leaves the storage area 12. Each refrigerated van is assigned a Global Location Number (GLN). The GLN, together with the date and time of each dispatchment of product is input into the GRPS system of the van, this is then communicated to the central computer 20 at step 27. The location of the refrigerated van can be monitored at all times using the GPS system.

Once the records have been updated at step 27 delivery of the product to the end user is effected at step 28. This might be at the hospital or pharmacy 14a or directly to the patient 14b. On arrival at the delivery point the driver of the refrigerated van scans the patient barcode, the delivery date and time are also entered either manually or automatically. This data is transmitted to the central computer 20 from the GRPS system 30.

In respect of a delivery to the pharmacy or hospital 14a, a further barcode 15a is scanned which identifies the hospital or pharmacy 14a as the point of delivery. Once the delivery is made to the hospital or pharmacy 14a, responsibility for the delivery is transferred to either the hospital or pharmacy. However in respect of a delivery directly to a patient 14b, the delivery is made to an appropriate designated point. This is very often a refrigerated unit with suitable identification i.e. barcode and/or security tag 15b. Delivery is only completed in this case when the driver scans the appropriate barcode either 15a or 15b. Once delivery is completed at step 29, the central computer is again updated by the GRPS system 30.

The central computer 20 then electronically advises the hospital or pharmacy 14a at step 108 that delivery has been completed. The central computer also advises the Central Authority 20a and/or other relevant authorities 14d that the delivery has taken place. This in effect maintains quality control of the above system.

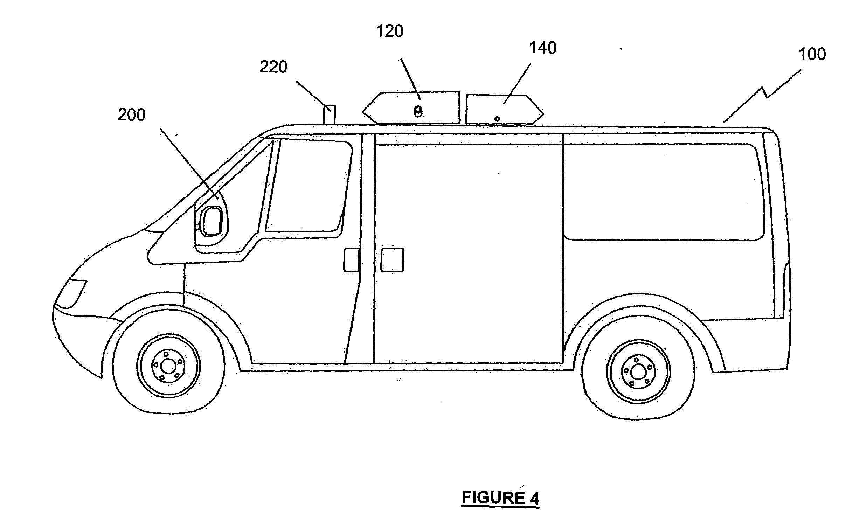

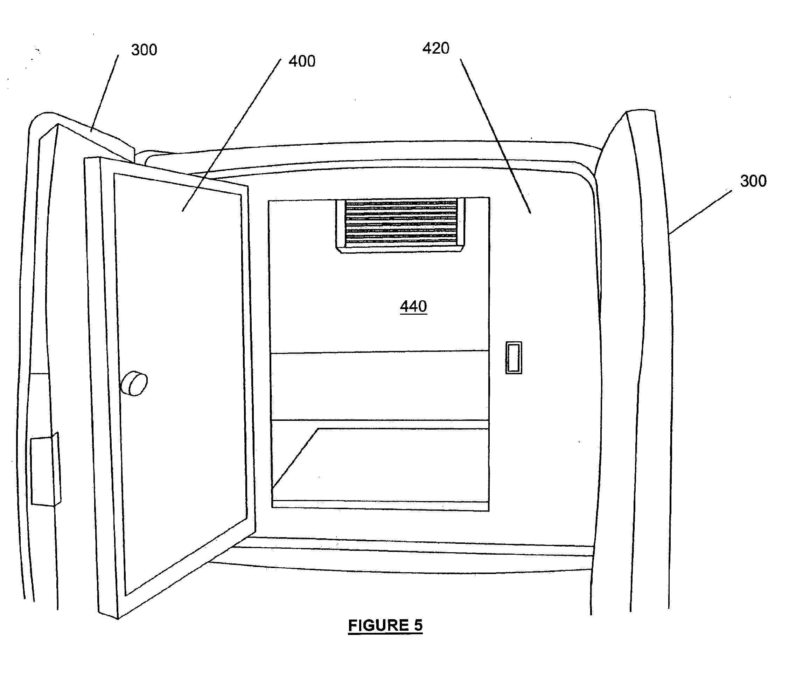

Referring to Figures 4 and 5, the refrigerated vehicle 100 comprises two refrigerating units 120 and 140 mounted on the roof of the vehicle. The refrigerating unit 120 is connected and powered by the engine. The refrigerating unit 140 is battery powered and can also be powered from a mains electricity supply.

Audio and visual alarms are built into the dashboard 200 of the vehicle. The GPS system aerial 220 is built into the roof of the vehicle 100. The GPS system is linked to the temperature recording system, which allows "real time" temperature monitoring from the central computer. Any temperature excursions are notified to the driver by audible alarm, the GPS system relays the alarm to the central computer which alerts an on-call member of staff by text message and special alert display on a PC monitor. The temperature of the refrigerated vehicle 100 is constantly monitored and recorded to provide a verifiable record of each journey.

As can be seen in Figure 5, when the rear doors 300 of the vehicle are opened, another door 400 of the fridge unit 420 has to be opened to gain access to the unit. The fridge door 400 is purpose built for extra insulation and extra insulation 440, 7-10 cm thick is provided in the fridge unit 420.

It will or course be understood that the present invention is not limited to the specific details herein described which are given by way of example only, and that various alternations and modifications may be made without departing from the scope of the invention as defined in the appended claims.

## Claims

1. A method for temperature controlled delivery of products, the method comprising the steps of:
storing products in a storage area at the required range of temperatures;
importing details of the stored products to a stock file on a computer;
accepting orders for stored products from an end-user;
importing details of each order into an order file on the computer;
relating order details in order file to stored product information in stock file on the computer;
generating a delivery order notice which includes product information from stock file on the computer;
issuing stored product and delivery order notice from the storage area;
placing issued product and delivery order notice into a refrigerated vehicle with temperatures at the required range, the refrigerated vehicle having a Global Positioning System;
importing information on delivery order notice electronically into a general packet radio service communication system;
delivering issued product to an end user from the refrigerated vehicle; and
updating the stock file and/or the order file on the computer from general packet radio service communication system once delivery of issued product has been completed.

2. A method as claimed in Claim 1, further comprising the step of providing a secure means for tracking and tracing products from the storage area to the end-user.

3. A method as claimed in Claim 1 or Claim 2, further comprising the step of recalling products to the storage area at any stage during the steps of the method, should a problem with a particular product be detected.

4. A method as claimed in any one of the preceding claims, further comprising the step of using international standards to uniquely identify each product.

5. A method as claimed in any one of the preceding claims, further comprising the step of using an international standard barcode system to uniquely identify each product.

6. A method as claimed in any one of the preceding claims, further comprising the step of giving each product a barcode when produced.

7. A method as claimed in any one of the preceding claims, further comprising the step of giving each product a second barcode when storing the product.

8. A method as claimed in Claim 6 or Claim 7, further comprising the step of including a Global Trade Item Number identifying the product name and strength in the barcode.

9. A method as claimed in any one of Claim 6, Claim 7 or Claim 8, further comprising the step of including at least one of the following pieces of additional information, quantity information, serial number, batch information, and expiration information in either barcode.

10. A method as claimed in Claim 9 further comprising the step of scanning the or each barcode of each product, for electronic entry of product information into the stock file.

11. A method as claimed in any one of the preceding claims, further comprising the step of using network and telecommunication systems that facilitate a secure environment for data transmission.

12. A method as claimed in Claim 11, further comprising the step of using a central computer within the network to store the product and order information in stock and order files respectively.

13. A method as claimed in Claim 12, further comprising the step of enabling access to the central computer as required by other computers on the network.

14. A method as claimed in any one of Claims 12 or Claim 13, further comprising the step of storing other pertinent information such as patient record files, possible substitutes for some or all of the products and patient prescriptions on the central computer.

15. A method as claimed in any one of the preceding claims, further comprising the step of using a Global Positioning System within the refrigerated vehicle.

16. A method as claimed in any one of the preceding claims, further comprising the step of using a general packet radio service communication system to update the central computer when making deliveries.

17. A method as claimed in any one of the preceding claims, further comprising the step of:
producing patient prescriptions from a doctor or a hospital electronic format;
forwarding the electronic prescriptions to a pharmacist for dispensing; and
the pharmacist forwarding the electronic prescription as an order to the temperature controlled system.

18. A method as claimed in Claim 17, further comprising the step of delivering the order to either the pharmacist where the patient can pick it up

19. A method as claimed in Claim 17, further comprising the step of delivering the order directly to the patient.

20. A method as claimed in any one of the preceding claims, further comprising the step of producing a patient barcode when the product is issued from the storage area.

21. A method as claimed in any one of the preceding claims, further comprising the step of attaching the patient barcode to each individual product.

22. A method as claimed in any one of the preceding claims, further comprising the step of including information such as a Global Relationship Service Number which identifies the relationship between two separate entities in the patient barcode

23. A method as claimed in any one of the preceding claims, further comprising the step of relocating the delivery location at any stage during the delivery process.

24. A method as claimed in any one of the preceding claims, further comprising the step of updating the stock and/or order files on the central computer once all deliveries have been completed using the GRPS system.

25. A method as claimed in any one of the preceding claims, further comprising the step of electronically advising the appropriate authorities that the delivery cycle has been completed using the central computer.

26. An apparatus operating in accordance with a method for temperature controlled delivery of products, the apparatus comprising means for storing products at temperatures in the desired range, means for electronically importing details of stored products into a stock file on a computer, means for accepting orders for stored products from an end-user, means for electronically importing details of the order into an order file on the computer, means for relating order details in the order file to stored product information in the stock file on the computer, means for generating a delivery order notice on the computer, means for issuing the stored product with the delivery order notice from the storage means, means for transporting the issued product to the end-user, the transporting means having a mobile communication system, means for installing the details from the delivery order notice into the communication system and means for updating the stock file and/or the order file on the computer from the mobile communication file once the issued product has been delivered to the end-user.
